# EUROPEAN PATENT APPLICATION

(11) **EP 4 050 678 A1**
(43) Date of publication of application: **31.08.2022**
(21) Application number: 21886973.3
(22) Date of filing: 01.11.2021
(51) Int. Cl.: H01M 4/134, H01M 4/1395, H01M 4/66, H01M 10/052

(54) **NEGATIVE ELECTRODE FOR LITHIUM METAL BATTERY, MANUFACTURING METHOD THEREOF, AND LITHIUM METAL BATTERY COMPRISING SAME**

(30) Priority: 02.11.2020 KR 20200144667; 28.10.2021 KR 20210146015
(71) Applicant: LG Energy Solution, Ltd., Seoul 07335 (KR)
(72) Inventor: YUN, Hyunwoong, Daejeon 34122 (KR)
(74) Representative: Hoffmann Eitle
(86) International application number: PCT/KR2021/015617
(87) International publication number: WO 2022/092980

(57) **Abstract**

The present disclosure provides a negative electrode for a lithium metal battery, including: a metal current collector substrate, a lithium metal layer formed on at least one surface of the metal current collector substrate, and a protective layer formed on the lithium metal layer, wherein the protective layer comprises a metal powder or metal wire; an alloyable metal powder or alloyable metal wire; or a mixture thereof, a manufacturing method thereof and a lithium metal battery including the same.

## Description

### [TECHNICAL FIELD]

### Cross Citation with Related Application(s)

This application claims the benefit of Korean Patent Application No. 10-2020-0144667 filed on November 2, 2020 and Korean Patent Application No. 10-2021-0146015 filed on October 28, 2021 in the Korean Intellectual Property Office, the disclosures of which are incorporated herein by reference in their entirety.

The present disclosure relates to a negative electrode for a lithium metal battery, a manufacturing method thereof and a lithium metal battery comprising the same.

### [BACKGROUND ART]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

Recently, along with the increase of the technological development and demand for mobile devices such as portable computers, portable phones, and cameras, the demand for secondary batteries has also sharply increased as an energy source. Among such secondary batteries is a lithium secondary battery exhibiting high charge/discharge characteristics and lifespan characteristics and being environmentally friendly, in which much research has been carried out and which is now commercialized and widely used.

Generally, the secondary battery has a structure in which a non-aqueous electrolyte solution is impregnated into an electrode assembly comprising a positive electrode, a negative electrode, and a porous separator. Further, the positive electrode is generally manufactured by coating a positive electrode mixture including a positive electrode active material onto aluminum foil, and the negative electrode is manufactured by coating a negative electrode mixture including a negative electrode active material onto a copper foil.

Usually, the positive electrode active material uses a lithium transition metal oxide, and the negative electrode active material uses a carbon-based material.

However, recently, as a negative electrode active material, a lithium metal battery using a lithium metal itself exhibiting a high energy density has been commercialized.

At this time, since the lithium metal used as the negative electrode has a low density (0.54 g/cm³) and a very low standard reduction potential (-3.045 V SHE: standard hydrogen electrode), it is a material that attracts considerable attention as a negative electrode material for a high-energy density battery. Further, despite problems caused by very high chemical activity, recently, with steady increase in the use of mobile communications and portable electronic devices and rapid development thereof, a demand for development of a secondary battery having high energy density is continuously increasing. Therefore, the necessity for using lithium metal negative electrodes continues to emerge.

In this case, when a lithium metal electrode is used as the negative electrode, the lithium metal has very excellent reactivity, and so it reacts with the atmosphere and collapses during the assembly of the secondary battery, and the lithium electrodeposition layer formed by charging causes a severe side reaction by direct contact with the electrolyte, which leads to rapid deterioration of lifespan characteristics.

Therefore, there is a need to develop a negative electrode that can solve the above problems and thus can be used in a lithium metal battery.

### [DETAILED DESCRIPTION OF THE INVENTION]

### [Technical Problem]

The present disclosure has been designed to solve the above-mentioned problems and other technical problems that have yet to be resolved.

Specifically, an object of the present disclosure is to provide a negative electrode that can reduce resistance by minimizing the negative electrode from reacting with the atmosphere during assembly of the secondary battery.

Another object of the present disclosure is to minimize the thickness of the lithium electrodeposition layer formed during the operation of a lithium metal battery using the same, increase the electrodeposition density, prevent side reactions of the electrolyte solution, and thus improve lifespan characteristics.

### [Technical Solution]

In order to achieve the above object, according to one embodiment of the present disclosure, there is provided a negative electrode for a lithium metal battery, the negative electrode comprising:
a metal current collector substrate, a lithium metal layer formed on at least one surface of the metal current collector substrate, and a protective layer formed on the lithium metal layer,
wherein the protective layer comprises a metal powder or metal wire; an alloyable metal powder or alloyable metal wire; or a mixture thereof.

The metal current collector substrate may be one selected from the group consisting of copper, stainless steel, aluminum, nickel, titanium, calcined carbon, copper that is surface-treated with dissimilar metal, stainless steel that is surface-treated with dissimilar metal, and an aluminum-cadmium alloy.

The metal current collector substrate may be copper.

In one specific embodiment, the lithium metal layer may have a thickness of 1 to 100 *µ*m.

In one specific embodiment, the metal powder or metal wire may include a metal selected from the group consisting of copper, stainless steel, nickel, titanium, calcined carbon, and dissimilar metal, and particularly, it may include a metal of copper or nickel.

Further, the alloyable metal powder or alloyable metal wire may include an alloyable metal selected from the group consisting of Mg, Ca, Al, Si, Ge, Sn, Pb, As, Sb, Bi, Ag, Zn, Cd, P and Hg.

In one specific embodiment, a diameter of each of the metal powder and the alloyable metal powder of the protective layer may be 1 nm to 30 *µ*m, a diameter of each of the metal wire and the alloyable metal wire of the protective layer may be 1 nm to 30 *µ*m, and each aspect ratio (length of wire/diameter of wire) thereof may be 3 or more.

In one specific embodiment, the protective layer may be a metal powder or a metal wire; and a mixture of alloyable metal powder or alloyable metal wire.

In one specific embodiment, the protective layer may have a thickness of 0.1 *µ*m to 100 *µ*m, and the protective layer may have a porosity of 1 to 70%.

The protective layer may further include a binder and a conductive material.

According to another embodiment of the present disclosure, there is provided a method for manufacturing the negative electrode according to claim 1, the method comprising the steps of:
(a) forming a lithium metal layer on at least one surface of a metal current collector substrate;
(b) mixing a metal powder or metal wire; an alloyable metal powder or alloyable metal wire;
   or a mixture thereof together with a solvent to prepare a slurry; and
(c) coating the slurry onto the lithium metal of step (a) and drying to form a protective layer, thereby manufacturing a negative electrode,
   wherein the powder or wire of step (b) has a diameter of 1 *µ*m to 30 *µ*m.

According to another embodiment of the present disclosure, there is provided a method for manufacturing the negative electrode according to claim 1, the method comprising the steps of:
(a) forming a lithium metal layer on at least one surface of a metal current collector substrate;
(b) dispersing a metal powder or metal wire; an alloyable metal powder or alloyable metal wire; or a mixture thereof in a solvent to prepare a dispersion; and
(c) coating the dispersion onto the lithium metal of step (a) and drying to form a protective layer, thereby manufacturing a negative electrode,
   wherein the powder or wire of step (b) has a diameter of 1 nm to 1000nm.

In this case, the slurry or dispersion may be prepared so that the solid content of the metal powder, metal wire, alloyable metal powder, or alloyable metal wire in the slurry or dispersion accounts for 0.1 to 80 vol.% based on the total volume of the slurry or dispersion.

According to yet another embodiment of the present disclosure, there is provided a lithium metal battery in which an electrode assembly is built together with a lithium non-aqueous electrolyte in a battery case, with the electrode assembly comprising:
the negative electrode according to claim 1;
a positive electrode having a structure in which a positive electrode mixture including an active material is coated onto at least one surface of a positive electrode current collector; and
a separator interposed between the negative electrode and the positive electrode.

In this case, the negative electrode may further include a lithium electrodeposition layer formed by precipitation of lithium on the protective layer, and a thickness of the lithium electrodeposition layer may be 0.1 to 90 *µ*m.

### [DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise.

Further, throughout the specification, when a portion is referred to as "including" a certain component, it means that the portion can further include other components, without excluding the other components, unless otherwise stated.

According to one embodiment of the present disclosure, there is provided a negative electrode for a lithium metal battery, the negative electrode comprising: a metal current collector substrate, a lithium metal layer formed on at least one surface of the metal current collector substrate, and a protective layer formed on the lithium metal layer, wherein the protective layer comprises a metal powder or metal wire; an alloyable metal powder or alloyable metal wire; or a mixture thereof.

Here, the alloyable metal means a metal capable of forming an alloy with lithium. Also, the dissimilar metals may be at least one selected from the group consisting of Cu-Ni, Ti-Ni, Cu-Al, Cu-Zn, Sn-Al, and Si-Ag.

The metal current collector substrate may be one selected from the group consisting of copper, stainless steel, aluminum, nickel, titanium, calcined carbon, copper that is surface-treated with dissimilar metal, stainless steel that is surface-treated with dissimilar metal, and an aluminum-cadmium alloy.

The metal current collector substrate may be copper.

The lithium metal layer is a negative electrode active material, and the thickness and amount thereof may be determined according to the desired purpose, but is not limited thereto. For example, it may have a thickness of 1 to 100 *µ*m, particularly a thickness of 5 to 70 *µ*m, more particularly 10 to 50 *µ*m.

When the thickness is too thin outside the above range, lithium is not sufficient as an active material, whereas when the thickness is too thick, subsequently, the lithium electrodeposition layer is formed during charge and discharge of the secondary battery and functions like an active material. Thus, the energy density relative to the volume may be rather decreased, and so it is most preferable to satisfy the above range.

However, as described above, the negative electrode in which only such a lithium metal layer is formed has high reactivity to the atmosphere during assembly, and when lithium is electrodeposited by charge and discharge, there is a problem that a lithium layer having a low electrodeposition density is formed, a side reaction of an electrolyte solution becomes excessive, and rapid deterioration of the lifespan characteristics occurs. This is because the lithium metal layer has a low affinity for lithium, and is unevenly electrodeposited when lithium is electrodeposited.

In order to solve these problems, according to the present embodiment, a protective layer having a grain boundary as a thin layer can be formed on the lithium metal layer, thereby increasing the specific surface area and decreasing the resistance. Subsequently, when lithium is electrodeposited by charge and discharge, a lithium electrodeposition layer having a high electrodeposition density may be formed.

The metal powder or metal wire included in the protective layer may comprise a metal selected from the group consisting of copper, stainless steel, nickel, titanium, calcined carbon, and dissimilar metals, and specifically, it may comprise a metal of copper or nickel.

Further, the alloyable metal powder or alloyable metal wire may comprise an alloyable metal selected from the group consisting of Mg, Ca, Al, Si, Ge, Sn, Pb, As, Sb, Bi, Ag, Zn, Cd, P and Hg, and specifically, it may comprise an alloyable metal of Al or Si.

In this manner, the present disclosure may include the metal or the alloyable metal in powder or wire form, and specifically, in the case of a protective layer composed only of alloyable metal, lithium is alloying/dealloying in the alloyable metal, and the alloyable metal is isolated by a side reaction with an electrolyte solution and can be transformed into a by-product with high resistance, whereby in order to maintain the protective layer even when the alloyable metal is consumed, it contains a mixture of the metal powder or metal wire and the alloyable metal powder or alloyable metal wire, and more specifically, it may consist of a mixture.

When the protective layer consists of a mixture, the metal powder or metal wire, and the alloyable metal powder or alloyable metal wire may be mixed in a ratio of 1:99 to 99:1, specifically in a ratio of 1:9 to 9:1, more specifically in a ratio of 3:7 to 7:3, based on their weight.

Meanwhile, it is preferable that the protective layer includes the metal or alloyable metal in a powder form and/or a wire form, and thus becomes a form having a grain boundary and has a predetermined or more pores.

At this time, each diameter of the metal powder or alloyable metal powder of the protective layer may be 1 nm to 30 *µ*m. Further, the diameter of each of the metal wire and the alloyable metal wire of the protective layer is 1nm to 30 *µ*m, and each aspect ratio (length of wire/diameter of wire) thereof may be 3 or more, specifically 3 or more and 2000 or less.

Forms having too small diameter outside the above range are difficult to manufacture, and if the diameter is too large outside the above range, the effect of increasing the specific surface area is insignificant, which is thus not preferable. If the aspect ratio of the wire is too large, it is difficult to form a protective layer, and if the aspect ratio is too small, it is not different from powder.

In this case, the diameter is the average diameter (D50), which means a particle diameter corresponding to a point of 50% in the cumulative distribution of the number of particles relative to the particle diameter. That is, D50 is the particle diameter corresponding to a point of 50% in the cumulative distribution of the number of particles relative to the particle diameter.

This can be measured by using a laser diffraction method. Specifically, the powder to be measured is dispersed in a dispersion medium, and then introduced into a commercially available laser diffraction particle size analyzer (e.g., Microtrac S3500). When the particles pass through the laser beam, the diffraction pattern difference according to the particle size is measured to calculate the particle size distribution. D50 can be measured by calculating the particle diameter corresponding a point of 50% in the cumulative distribution of the number of particles relative to the particle diameter in the analyzer.

The aspect ratio is a value obtained by dividing the length of the wire by this D50, wherein the length of the wire is a value obtained by arbitrarily designates metals or alloyable metal wires formed by taking an SEM photograph by 10 to 100 numbers and calculating an average value thereof.

When a protective layer having a grain boundary is included in this manner, the specific surface area of the negative electrode current collector increases, the number of sites on which lithium ions generated by charge and discharge can be electrodeposited increases, and subsequently, a lithium electrodeposition layer having an improved electrodeposition density can be obtained.

Such a protective layer is formed in a relatively thin range as an additional configuration, and so it is preferable not to lower the energy density relative to the volume of the lithium metal battery. Thus, the protective layer may have specifically a thickness of 0.1 *µ*m to 100 *µ*m, specifically a thickness of 1 *µ*m to 60 *µ*m, more specifically, a thickness of 1 *µ*m to 50 *µ*m.

When the protective layer is formed too thick outside the above range, a lot of lithium is inserted into such protective layer and thus, the lithium electrodeposition layer by electrodeposition cannot be sufficiently obtained and high energy density cannot be obtained. When the protective layer is formed too thin, the effect of improving the electrodeposition density of lithium according to charge and discharge, which is the intended effect of the present disclosure, cannot be obtained, which is not preferable.

For such a protective layer, since the interfacial resistance becomes large when the porosity is too small. Thus, it is preferable to have a porosity of at least 1% or more, specifically 10% or more, and more specifically 20% or more, In order for the protective layer to have a certain strength and to reduce the thickness of the lithium electrodeposition layer through an alloying mechanism, at least a certain amount of the metal or alloyable metal is required, and thus, it is preferable to have a porosity of 70% or less, specifically 60% or less, and more specifically 50% or less. Such porosity may vary depending on the solid content, drying conditions, manufacturing method, etc. Specifically, when prepared using a slurry in the following, it can be formed in the range of 20 to 70%, and when prepared using a dispersant, it may be formed in the range of 1 to 30%.

Meanwhile, in the absence of a binder, the protective layer can supplement the binder effect through coating, drying, and rolling, and the protective layer itself is a metal material and thus may not include a conductive material. However, when the thickness of the protective layer becomes thicker, a binder for further binding them and a conductive material for enhancing conductivity may be additionally included.

Specific examples of the binder may include polyvinylidene fluoride (PVDF), vinylidene fluoride-hexafluoropropylene copolymer (PVDF-co-HFP), polyvinyl alcohol, polyacrylonitrile, carboxymethylcellulose(CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluororubber, or various copolymers thereof. The metal and alloyable metal of the protective layer and the binder may be included in a ratio of 7:3 to 99:1 based on their weight.

When the content of the binder is too large outside the above range, the protective layer is formed and thus, it is difficult to sufficiently exhibit the effect of improving the electrodeposition density of the lithium electrodeposition layer that was tried to be achieved. When the content of the binder is too small, binding to the lithium metal layer is not performed well, which is not preferable.

The conductive material is not particularly limited as long as it has high conductivity without causing a chemical change in the corresponding battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; carbon fluoride powder; metal powders such as aluminum powder, and nickel powder; conductive whisker such as zinc oxide and potassium titanate; conductive metal oxides such as titanium oxide; conductive materials such as polyphenylene derivatives can be used. In this case, the metal and alloyable metal of the protective layer and the conductive material may be included in a ratio of 7:3 to 99:1 based on their weight.

According to another embodiment of the present disclosure, there is provided a method for manufacturing the negative electrode, the method comprising the steps of:
(a) forming a lithium metal layer on at least one surface of a metal current collector substrate;
(b) mixing a metal powder or metal wire; an alloyable metal powder or alloyable metal wire;
   or a mixture thereof together with a solvent to prepare a slurry; and
(c) coating the slurry onto the lithium metal of step (a) and drying to form a protective layer, thereby manufacturing a negative electrode,
   wherein the powder or wire of step (b) has a diameter of 1 *µ*m to 30 *µ*m.

According to another embodiment of the present disclosure, there is provided a method for manufacturing the negative electrode, the method comprising the steps of:
(a) forming a lithium metal layer on at least one surface of a metal current collector substrate;
(b) dispersing a metal powder or metal wire; an alloyable metal powder or alloyable metal wire; or a mixture thereof in a solvent to prepare a dispersion; and
(c) coating the dispersion onto the lithium metal of step (a) and drying to form a protective layer, thereby manufacturing a negative electrode,
   wherein the powder or wire of step (b) has a diameter of 1 nm to 1000nm.

That is, in the manufacturing method, a protective layer is formed by coating onto the lithium metal layer formed on at least one surface of the metal current collector substrate, but the manufacturing method differs depending on the diameter of the metal or alloyable metal powder or wire included in the protective layer.

Specifically, when the diameter is relatively large, it can be manufactured in the form of a slurry and coated on the lithium metal layer. When the diameter is small, it can be manufactured by a method of preparing a pre-dispersion containing a metal or alloyable metal powder or a wire and coating it onto a lithium metal layer, as in the method of preparing a conductive material pre-dispersion.

The diameter is the average diameter (D50) of the particles, which is as described above.

Specifically, the diameter of the powder or wire may be specifically 0.01 *µ*m to 10 *µ*m, and more specifically 0.1 *µ*m to 5 *µ*m.

In the manufacturing method as described above, in order to satisfy the effect according to the present disclosure, it is more preferable to adjust the porosity as described above, whereby the slurry or dispersion can be prepared so that the solid content of the metal powder, metal wire, alloyable metal powder, or alloyable metal wire contained in the solvent occupies 0.1 to 80 vol.% based on the total volume of the slurry or the dispersion. More specifically, the slurry is prepared so that the solid content of the slurry occupies 30 to 80 vol.% based on the total volume of the slurry, or the dispersion is prepared so that the solid content of the dispersion occupies 0.1 to 30 wt.% based on the total volume of the dispersion, and then the prepared slurry or dispersion can be coated and dried to adjust the porosity.

Specific types of the metal powder or metal wire, the alloyable metal powder or the alloyable metal wire are the same as described above.

Meanwhile, the lithium metal layer may be formed by a method such as vapor deposition or electrodeposition.

According to yet another embodiment of the present disclosure, there is provided a lithium metal battery in which an electrode assembly is built together with a lithium non-aqueous electrolyte in a battery case, with the electrode assembly comprising: the negative electrode; a positive electrode having a structure in which a positive electrode mixture including an active material is coated onto at least one surface of a positive electrode current collector; and a separator interposed between the negative electrode and the positive electrode.

The positive electrode has a structure in which a positive electrode mixture including an active material is coated onto at least one surface of a positive electrode current collector.

The positive electrode current collector is not particularly limited as long as it has conductivity while not causing chemical changes to the battery, and for example, stainless steel, aluminum, nickel, titanium, calcined carbon, or aluminum or stainless steel having a surface treated with carbon, nickel, titanium, silver, and the like can be used. In addition, the positive electrode current collector may have a thickness of 3 to 500 *µ*m, and may have fine irregularities formed on the surface of the current collector to increase the adhesion of the positive electrode active material. For example, it may be used in various forms such as films, sheets, foils, nets, porous bodies, foams, and nonwoven fabrics.

The positive electrode active material as the active material may include, for example, a layered compound such as lithium nickel oxide (LiNiO₂), or a compound substituted with one or more transition metals; lithium manganese oxides such as chemical formulae Li₁₊ₓMn₂₋ₓO₄ (where x = 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M = Co, Mn, Al, Cu, Fe, Mg, B or Ga, and x= 0.01- 0.3); lithium manganese composite oxide represented by chemical formulae LiMn₂₋ₓMₓO₂ (where M = Co, Ni, Fe, Cr, Zn or Ta, and x = 0.01-0.1) or Li₂Mn₃MO₈ (where M = Fe, Co, Ni, Cu or Zn ); LiNiₓMn₂₋ₓO₄; LiMn₂O₄ in which a part of Li in the chemical formula is substituted with an alkaline earth metal ion; a disulfide compound; Fe₂(MoO₄)₃, and the like, without being limited thereto.

The positive electrode mixture may further include a conductive material and a binder together with the positive electrode active material described above.

The conductive material is typically added in an amount of 0.1 to 30% by weight, specifically 1 to 10% by weight, and more specifically 1 to 5% by weight based on the total weight of the positive electrode mixture layer. The conductive material is not particularly limited as long as it has high conductivity without causing a chemical change in the corresponding battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; carbon fluoride powder; metal powders such as aluminum powder, and nickel powder; conductive whiskey such as zinc oxide and potassium titanate; conductive metal oxides such as titanium oxide; conductive materials such as polyphenylene derivatives can be used.

The binder is a component that assists in coupling of an active material, a conductive material, and the like, and in coupling of a current collector, and typically, may be added in an amount of 0.1 to 30% by weight, specifically 1 to 10% by weight, more specifically 1 to 5% by weight based on the total weight of the positive electrode mixture. An example of the binder may include polyvinylidene fluoride, polyvinylidene fluoride-hexafluoropropylene, polyvinyl alcohol, carboxymethyl cellulose (CMC), starch, hydroxypropyl cellulose, regenerated cellulose, polyvinylpyrrolidone, tetrafluoroethylene, polytetrafluoroethylene, polyethylene, polypropylene, ethylene-propylene-diene polymer (EPDM), sulfonated EPDM, styrene-butadiene rubber, fluorine rubber, various copolymers, and the like.

The separator is an insulating thin film having high ion permeability and mechanical strength. The pore diameter of the separator is generally 0.01 to 10 *µ*m, and the thickness is generally 5 to 300 *µ*m. As such separator, for example, chemical resistant and hydrophobic olefin-based polymers such as polypropylene; sheets or non-woven fabrics made of glass fiber or polyethylenere is used. When a solid electrolyte such as a polymer is used as the electrolyte, the solid electrolyte may also serve as a separator.

The lithium non-aqueous electrolyte generally includes a lithium salt and a non-aqueous solvent. As the non-aqueous solvent, a non-aqueous organic solvent, an organic solid electrolyte, an inorganic solid electrolyte, or the like is used, but is not limited thereto.

As examples of the non-aqueous electrolyte, mention may be made of non-protic organic solvents, such as N-methyl-2-pyrrolidone, propylene carbonate, ethylene carbonate, butylene carbonate, dimethyl carbonate, diethyl carbonate, gamma-butyro lactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups, and the like.

Examples of the inorganic solid electrolyte include nitrides, halides and sulfates of lithium (Li) such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂.

The lithium salt is a material that is readily soluble in the non-aqueous electrolyte. The lithium salt may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, and imide.

In addition, in order to improve charge/discharge characteristics, flame retardancy and the like, the non-aqueous electrolyte may further include, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like. In some cases, in order to impart incombustibility, the electrolyte may further include halogen-containing solvents, such as carbon tetrachloride and ethylene trifluoride. Furthermore, in order to improve high-temperature retention characteristics, the electrolyte may further include carbon dioxide gas. In addition, it may further include fluoro-ethylene carbonate (FEC), propene sultone (PRS), and the like.

The battery case is not limited as long as it has a structure capable of housing an electrode assembly, and may be a pouch type battery, or a prismatic or cylindrical battery case made of a metal can, which is known in the art.

Meanwhile, the lithium metal battery is manufactured by incorporating an electrode assembly together with a lithium non-aqueous electrolyte into a battery case, sealing the case, and activating the battery, wherein the negative electrode may further include a lithium electrodeposition layer due to the precipitation of lithium on the protective layer.

Specifically, when lithium is charged in the protective layer, lithium first reacts with the metal or alloyable metal. For example, in the case of an alloyable metal, it causes an alloying reaction. Subsequently, after the alloying reaction is completed, lithium electrodeposition proceeds above the alloy particles.

Therefore, according to the present disclosure, since the lithium electrodeposition layer must be essentially included, the amount of lithium provided by the positive electrode must exceed, for example, the amount alloyable by Al. In other words, if the amount of lithium that the positive electrode can provide is called the positive electrode loading (e.g., 5 mAh/cm²), and the amount capable of being alloyable by Al formed on the negative electrode is called negative electrode loading (e.g., 1 mAh/cm²), Li as much as 1mAh/cm² forms Li₉Al₄, and 4mAh/cm² forms a lithium electrodeposition layer.

According to the present disclosure, the lithium electrodeposition layer is also used as a negative electrode active material. In the case where the protective layer is not formed in the past, the electrodeposition thickness of the lithium electrodeposition layer becomes as thick as 100 *µ*m or more, and the reaction area with the electrolyte solution is wide, and the lifespan characteristics are rapidly degraded. However, according to the present disclosure, as the protective layer is alloyable with lithium and the thickness of the lithium electrodeposition layer becomes as thin as 90 *µ*m or less, the side reactivity with the electrolyte solution is reduced, which can exhibit improved lifespan characteristics.

More specifically, according to the present disclosure, the thickness of the lithium electrodeposition layer may be 0.1 to 90 *µ*m, specifically 5 to 40 *µ*m, and more specifically 10 to 30 *µ*m.

In addition, by forming the protective layer as described above, the reaction of the negative electrode with the atmosphere during the assembly of the secondary battery can be minimized, and thus the resistance may be reduced.

Hereinafter, preferred examples of the present disclosure, comparative examples for comparing them, and experimental examples for evaluating them are described. However, it will be obvious to those skilled in the art that these examples are for illustrative purposes only and various changes and modifications can be made without deviating from the scope and spirit of the present description, and it goes without saying that such modifications and modifications fall within the scope of the appended claims.

### <Comparative Example 1>

A commercially available copper current collector (I2B, Iljin Materials) was prepared as a metal current collector substrate.

A lithium foil (Li foil, thickness: 20 *µ*m) was placed so as to be opposed to one surface of the copper current collector, and then the current collector and the lithium foil were laminated and roll-pressed to the extent that they did not detach to form a lithium metal layer. Thereby, the negative electrode was obtained.

### <Comparative Example 2>

A commercially available copper current collector (I2B, Iljin Materials) was prepared as a metal current collector substrate.

A lithium foil (Li foil, thickness: 20 *µ*m) was placed so as to be opposed to one surface of the copper current collector, and then the current collector and the lithium foil were laminated and roll-pressed to the extent that they did not detach to form a lithium metal layer.

Aluminum metal was sputter-deposited on the lithium metal layer, to a thickness of 7 *µ*m aluminum metal under vacuum to obtain a negative electrode.

### <Comparative Example 3>

A commercially available copper current collector (I2B, Iljin Materials) was prepared as a metal current collector substrate.

A lithium foil (Li foil, thickness: 20 *µ*m) was placed so as to be opposed to one surface of the copper current collector, and then the current collector and the lithium foil were laminated and roll-pressed to the extent that they did not detach to form a lithium metal layer.

Sainless steel metal was sputter-deposited on the lithium metal layer, to a thickness of 7 um Sainless steel metal under vacuum to obtain a negative electrode.

### <Example 1>

A commercially available copper current collector (I2B, Iljin Materials) was prepared as a metal current collector substrate.

A lithium foil (Li foil, thickness: 20 *µ*m) was placed so as to be opposed to one surface of the copper current collector, and then the current collector and the lithium foil were laminated and roll-pressed to the extent that they did not detach to form a lithium metal layer.

Further, a copper metal powder (particle diameter (D50): 3 *µ*m), and a binder (PVDF) were mixed in a weight ratio of 9:1 in an NMP solvent so that the solid content : NMP solvent was 5:5 by volume, thereby forming a protective layer slurry. The resulting slurry was coated and dried on the lithium metal layer to form a protective layer with a thickness of 7 *µ*m. Thereby, the negative electrode was obtained.

### <Example 2>

The negative electrode was obtained in the same manner as in Example 1, except that in Example 1, a mixture of copper metal powder (particle diameter (D50): 3 *µ*m) and silicon powder (particle diameter (D50): 3 *µ*m) in a weight ratio of 5:5 and a binder (PVDF) were mixed in a weight ratio of 9:1 in an NMP solvent so that the solid content : NMP solvent was 5:5 by volume, thereby forming a protective layer slurry, and the resulting slurry was coated and dried on the lithium metal layer to form a protective layer with a thickness of 7 *µ*m.

### <Example 3>

The negative electrode was obtained in the same manner as in Example 1, except that in Example 1, a silicon powder (particle diameter (D50): 3 *µ*m) and a binder (PVDF) were mixed in a weight ratio of 9:1 in an NMP solvent so that the solid content : NMP solvent was 5:5 by volume, thereby forming a protective layer slurry, and the resulting slurry was coated and dried on the lithium metal layer to form a protective layer with a thickness of 7 *µ*m.

### <Example 4>

The negative electrode was obtained in the same manner as in Example 1, except that in Example 1, an aluminum powder (particle diameter (D50): 3 *µ*m), and a binder (PVDF) were dispersed in a weight ratio of 9:1 in an NMP solvent so that the solid content: NMP solvent was 5:5 by volume, thereby forming a protective layer slurry, and the resulting slurry was coated and dried on the lithium metal layer to form a protective layer with a thickness of 7 *µ*m.

### <Example 5>

The negative electrode was obtained in the same manner as in Example 1, except that in Example 1, a copper metal powder (particle diameter (D50): 500 nm), and a silicon powder (particle diameter (D50): 50 nm) were dispersed in a weight ratio of 5:5 in an NMP solvent so that the solid content : NMP solvent was 1:9 by volume, thereby forming a dispersion, and the resulting dispersion was coated and dried on the lithium metal layer to form a protective layer with a thickness of 3 *µ*m, which was rolled and laminated on the lithium metal.

### <Example 6>

The negative electrode was obtained in the same manner as in Example 1, except that in Example 1, a mixture of copper metal wire (particle diameter (D50): 500 nm, aspect ratio: 10) and silicon powder (particle diameter (D50): 3 *µ*m) in a weight ratio of 5:5, and a binder (PVDF) were mixed in a weight ratio of 9:1 in an NMP solvent so that the solid content : NMP solvent was 5:5 by volume, thereby forming a protective layer slurry, and the resulting slurry was coated and dried on the lithium metal layer to form a protective layer with a thickness of 7 *µ*m.

### <Example 7>

The negative electrode was obtained in the same manner as in Example 1, except that in Example 1, a mixture of copper metal powder (particle diameter (D50): 3 *µ*m) and silicon wire (particle diameter (D50): 500 nm, aspect ratio: 10) in a weight ratio of 5:5, and a binder (PVDF) were mixed in a weight ratio of 9:1 in an NMP solvent so that the solid content : NMP solvent was 5:5 by volume, thereby forming a protective layer slurry, and the resulting slurry was coated and dried on the lithium metal layer to form a protective layer with a thickness of 7 *µ*m.

### <Experimental Example 1>

LiNi_{0.8}Mn_{0.1}Co_{0.1}O₂ as a positive electrode active material, carbon black as a conductive material, and polyvinylidene fluoride (PVdF) as a binder were used, respectively. The positive active material: the conductive material: the binder were mixed in a weight ratio of 96:2:2, and NMP as a solvent was added to the resulting mixture to prepare a positive electrode active material slurry.

The positive electrode active material slurry was coated at a loading amount of 5.01 mAh/cm² per one side of an aluminum current collector, and then dried and rolled to obtain a positive electrode.

The electrolyte solution contains a solvent in which propylene carbonate (PC), diethyl carbonate (DEC) and dimethyl carbonate (DMC) were mixed in a volume ratio of 1:2:1 (PC:DEC:DMC). The electrolyte solution containing 1M LiFSI, 1M LiPF₆ and 30 wt.% of fluoroethylene carbonate (FEC) in the total amount of the electrolyte solution was prepared.

A polyethylene separator (thickness: 20 *µ*m) was interposed between the negative electrodes of Comparative Examples 1 to 3 and Examples 1 to 7 and the positive electrode, then the electrolyte solution was injected, and a CR2032 coin cell was manufactured according to a conventional method to obtain lithium metal batteries.

The prepared lithium metal battery was charged under the following conditions, and then the lithium metal battery was disassembled, and the thickness of the lithium electrodeposition layer formed on the negative electrode was calculated, and are shown in Table 1 below.

Charge: 0.2C, CC/CV, 4.25V, 1/20C cut-off

The thickness of the electrodeposition layer was calculated by selecting two arbitrary points and obtaining the average of the thicknesses.

**[Table 1]**

| | Thickness (*µ*m) |
|---|---|
| Comparative Example 1 | 100 |
| Comparative Example 2 | 65 |
| Comparative Example 3 | 80 |
| Example 1 | 50 |
| Example 2 | 43 |
| Example 3 | 42 |
| Example 4 | 45 |
| Example 5 | 41 |
| Example 6 | 44 |
| Example 7 | 43 |

Referring to Table 1, it can be confirmed that in the case of the present disclosure, the electrodeposition thickness is remarkably reduced.

On the other hand, it can be confirmed that when the protective layer is not formed or is formed by a deposition method, the electrodeposition thickness is not sufficiently reduced. This is because the protective layer does not have sufficient porosity when it is formed by a deposition method.

### <Experimental Example 2>

In order to understand the degree of reaction of the negative electrode lithium with the atmosphere during the battery assembly process, lithium metal batteries were manufactured in the same manner as described in Experimental Example 1, but they were manufactured at a dew point of -20°C, and 1KHz Hioki resistance was measured before activation, and the results are shown in Table 2 below.

**[Table 2]**

| | Resistance (Ohm) |
|---|---|
| Comparative Example 1 | 2.59 |
| Comparative Example 2 | 1.20 |
| Comparative Example 3 | 2.01 |
| Example 1 | 1.15 |
| Example 2 | 1.19 |
| Example 3 | 1.22 |
| Example 4 | 1.21 |
| Example 5 | 1.11 |
| Example 6 | 1.18 |
| Example 7 | 1.18 |

Referring to Table 2, it can be confirmed that when a protective layer is applied onto the lithium metal, the reaction with the atmosphere is reduced and the cell internal resistance (measured by 1kHz Hioki resistance) is small.

### <Experimental Example 3>

Except for those fabricated of monocells with an area of 6.25cm², the lithium metal batteries manufactured under the conditions of Experimental Example 1 were charged and discharged 200 times under the following conditions, and then the 200-time discharge capacity retention rate relative to the one-time discharge capacity was calculated, and the results are shown in Table 3 below.
Charge: 0.2C, CC/CV, 4.25V, 1/20C cut-off
Discharge: 0.5C, CC, 3.0 V, cut-off

**[Table 3]**

| | one-time discharge capacity (mAh) | 100-time capacity retention rate (%) |
|---|---|---|
| Comparative Example 1 | 28.47 | 50 |
| Comparative Example 2 | 28.43 | 71 |
| Comparative Example 3 | 28.45 | 60 |
| Example 1 | 28.19 | 86 |
| Example 2 | 28.33 | 96 |
| Example 3 | 28.44 | 92 |
| Example 4 | 28.49 | 90 |
| Example 5 | 28.22 | 90 |
| Example 6 | 28.35 | 99 |
| Example 7 | 28.55 | 99 |

Referring to Table 3, it can be confirmed that as shown in Table 1, as the electrodeposition thickness becomes thinner, the lifespan of Examples is improved.

Also, it can be confirmed that when formed as in the present disclosure, it has predetermined pores rather than when formed by vapor deposition, whereby lithium in the lithium metal layer elutes smoothly outside the protective layer, and it has the effect of improving the lifespan characteristics. When formed by vapor deposition, there are almost no pores and thus, so the elution of lithium is difficult and the deterioration of lifespan is accelerated. Moreover, it can be confirmed that when using stainless steel, the effect is more deteriorated than when using aluminum.

Furthermore, it can be confirmed that the alloyable metal mixing the metal and the alloyable metal side-reacts with an electrolyte, and even if consumed, the metal remains and the protective layer can be maintained for a longer period of time, so the effect of improving the lifespan is more excellent. It can be seen that preparing a protective layer by mixing powder and wire can also result in a preferred form of protective layer.

Based on the above disclosure, various applications and modifications can be carried out by those of ordinary skill in the art without deviating from the spirit and scope of the present disclosure.

### [industrial Applicability]

As described above, the negative electrode according to an embodiment of the present disclosure forms a protective layer on the lithium metal layer and thus, has the effect of minimizing the reaction of the lithium metal with the atmosphere during the assembly process of the secondary battery, and reducing the increase in resistance.

Additionally, the lithium metal battery including the negative electrode utilizes an alloying mechanism of this protection during actual charge and discharge, whereby the thickness of the lithium electrodeposition layer formed on the protective layer can be minimized, the electrodeposition density can be increased, and thus the side reaction of the electrolytic solution can be minimized and the lifespan characteristics can be improved.

## Claims

1. A negative electrode for a lithium metal battery, the negative electrode comprising:
a metal current collector substrate, a lithium metal layer formed on at least one surface of the metal current collector substrate, and a protective layer formed on the lithium metal layer,
wherein the protective layer comprises a metal powder or metal wire; an alloyable metal powder or alloyable metal wire; or a mixture thereof.

2. The negative electrode according to claim 1, wherein:
the metal current collector substrate is one selected from the group consisting of copper, stainless steel, aluminum, nickel, titanium, calcined carbon, copper that is surface-treated with dissimilar metal, stainless steel that is surface-treated with dissimilar metal, and an aluminum-cadmium alloy.

3. The negative electrode according to claim 1, wherein:
the metal current collector substrate is copper.

4. The negative electrode according to claim 1, wherein:
the lithium metal layer has a thickness of 1 to 100 *µ*m.

5. The negative electrode according to claim 1, wherein:
the metal powder or metal wire comprises a metal selected from the group consisting of copper, stainless steel, nickel, titanium, calcined carbon, and dissimilar metal.

6. The negative electrode according to claim 5, wherein:
the metal powder or metal wire comprises a metal of copper or nickel.

7. The negative electrode according to claim 1, wherein:
the alloyable metal powder or alloyable metal wire comprises an alloyable metal selected from the group consisting of Mg, Ca, Al, Si, Ge, Sn, Pb, As, Sb, Bi, Ag, Zn, Cd, P and Hg.

8. The negative electrode according to claim 1, wherein:
a diameter of each of the metal powder and the alloyable metal powder of the protective layer is 1 nm to 30 *µ*m.

9. The negative electrode according to claim 1, wherein:
a diameter of each of the metal wire and the alloyable metal wire of the protective layer is 1 nm to 30 *µ*m, and each aspect ratio (length of wire/diameter of wire) thereof is 3 or more.

10. The negative electrode according to claim 1, wherein:
the protective layer is a mixture of a metal powder or a metal wire; and a mixture of alloyable metal powder or alloyable metal wire.

11. The negative electrode according to claim 1, wherein:
the protective layer has a thickness of 0.1 *µ*m to 100 *µ*m.

12. The negative electrode according to claim 1, wherein:
the protective layer has a porosity of 1 to 70%.

13. The negative electrode according to claim 1, wherein:
the protective layer further comprises a binder and a conductive material.

14. A method for manufacturing the negative electrode according to claim 1, the method comprising the steps of:
(a) forming a lithium metal layer on at least one surface of a metal current collector substrate;
(b) mixing a metal powder or metal wire; an alloyable metal powder or alloyable metal wire; or a mixture thereof together with a solvent to prepare a slurry; and
(c) coating the slurry onto the lithium metal of step (a) and drying to form a protective layer, thereby manufacturing a negative electrode,
wherein the powder or wire of step (b) has a diameter of 1 *µ*m to 30 *µ*m.

15. A method for manufacturing the negative electrode according to claim 1, the method comprising the steps of:
(a) forming a lithium metal layer on at least one surface of a metal current collector substrate;
(b) dispersing a metal powder or metal wire; an alloyable metal powder or alloyable metal wire; or a mixture thereof in a solvent to prepare a dispersion; and
(c) coating the dispersion onto the lithium metal of step (a) and drying to form a protective layer, thereby manufacturing a negative electrode,
wherein the powder or wire of step (b) has a diameter of 1 nm to 1000nm.

16. The method for manufacturing the negative electrode according to claim 14 or 15, wherein:
the slurry or dispersion is prepared so that the solid content of the metal powder, metal wire, alloyable metal powder, or alloyable metal wire in the slurry or dispersion occupies 0.1 to 80 vol.% based on the total volume of the slurry or dispersion.

17. A lithium metal battery in which an electrode assembly is built together with a lithium non-aqueous electrolyte in a battery case, with the electrode assembly comprising:
the negative electrode according to claim 1;
a positive electrode having a structure in which a positive electrode mixture including an active material is coated onto at least one surface of a positive electrode current collector; and
a separator interposed between the negative electrode and the positive electrode.

18. The lithium metal battery according to claim 17, wherein:
the negative electrode further comprises a lithium electrodeposition layer formed by precipitation of lithium on the protective layer, and a thickness of the lithium electrodeposition layer is 0.1 to 90 *µ*m.
